# EUROPÄISCHE PATENTANMELDUNG

(11) **EP 2 742 831 A1**
(43) Veröffentlichungstag der Anmeldung: **18.06.2014**
(21) Anmeldenummer: 13005820.9
(22) Anmeldetag: 13.12.2013
(51) Int. Cl.: A47G 21/14, A47J 47/16

(54) **Messerablage und Schublade mit einer Messerablage sowie Verfahren zur Herstellung einer Schublade mit einer Messerablage**

(30) Priorität: 14.12.2012 DE 202012011999 U
(71) Anmelder: Mußner, Fritz, 83308 Trostberg (DE)
(72) Erfinder: Mußner, Fritz, 83308 Trostberg (DE)
(74) Vertreter: Linsmeier, Josef

(57) **Zusammenfassung**

Die vorliegende Erfindung betrifft eine Messerablage (9) zur Aufnahme mindestens eines Messers (10, 14), welches einen Messergriff (12, 16) und eine Schneide (11, 15) aufweist, mit einer Grundplatte (1) und auf der Grundplatte (1) stehenden Noppen (2; 2', 2"), durch welche das Messer (10, 14) im Bereich der Schneide (11, 15) gehalten werden kann. Die Erfindung betrifft ferner eine Schublade mit einer Messerablage sowie ein Verfahren zur Herstellung einer Schublade mit einer Messerablage.

Die erfindungsgemäße Messerablage kann Messer (10, 14) unterschiedlicher Größe, insbesondere Klingenlänge, Klingenbreite und Klingendicke, aufnehmen, ist einfach zu reinigen und aufgrund ihrer Kompaktheit zum Einlegen in eine übliche Küchenschublade geeignet.

## Beschreibung

Die Erfindung betrifft eine Messerablage und eine Schublade mit einer Messerablage sowie ein Verfahren zur Herstellung einer Schublade mit einer Messerablage.

Hiermit wird der gesamte Inhalt der Gebrauchsmusteranmeldung DE 20 2012 011 999.0, deren Priorität in Anspruch genommmen wird, durch Bezugnahme Bestandteil der vorliegenden Anmeldung.

Messer, insbesondere Küchenmesser, werden in Schubladen häufig nur lose eingelegt, was eine gewisse Verletzungsgefahr beim Einlegen oder Herausnehmen eines Messers mit sich bringt und außerdem dazu führen kann, dass der Messerschliff durch aneinander reibende Messer mit der Zeit stumpf wird.

Aus dem Stand der Technik sind sog. Messerblöcke aus Holz bekannt, die mit Schlitzen versehen sind, in welche Messer einzeln eingeführt werden können. Bei solchen Messerblöcken werden die vorstehend genannten Nachteile in der Regel behoben. Messerblöcke sind jedoch in der Regel sehr sperrig, lassen sich nicht variabel verwenden und sind darüber hinaus nur schwer zu reinigen.

Es ist Aufgabe der Erfindung, eine Messerablage anzugeben, in welcher Messer verschiedener Größe aufgenommen werden können und welche einfach zu reinigen ist. Es ist ferner Aufgabe der Erfindung, eine entsprechende Schublade sowie ein Verfahren zur Herstellung einer solchen Schublade anzugeben.

Diese Aufgabe wird durch die Messerablage, die Schublade sowie das Verfahren gemäß den unabhängigen Ansprüchen gelöst.

Die erfindungsgemäße Messerablage zur Aufnahme mindestens eines Messers, welches einen Messergriff und eine Schneide aufweist, weist eine Grundplatte auf und zeichnet sich aus durch auf der Grundplatte stehende Noppen, durch welche das Messer im Bereich der Schneide gehalten werden kann. Vorzugsweise sind hierbei die Noppen auf der Grundplatte derart angeordnet, dass die Schneide des Messers in mindestens einem zwischen einzelnen Noppen befindlichen Zwischenraum aufgenommen und gehalten werden kann.

Ein erfindungsgemäßes Messerablagesystem weist eine erfindungsgemäße Messerablage sowie ein oder mehrere Messer, die jeweils einen Messergriff und eine Schneide aufweisen, auf.

Die erfindungsgemäße Schublade, welche insbesondere zur Verwendung in einem Küchenschrank geeignet ist, zeichnet sich durch eine im Inneren der Schublade angeordnete erfindungsgemäße Messerablage oder ein im Inneren der Schublade angeordnetes erfindungsgemäßes Messerablagesystem aus.

Das erfindungsgemäße Verfahren zur Herstellung einer Schublade mit einer Messerablage weist folgende Schritte auf: Bereitstellen einer Schublade, insbesondere einer Küchenschrankschublade, mit einem Aufnahmeraum zur Aufnahme von Objekten, wobei der Aufnahmeraum eine Breite und eine Tiefe aufweist; Bereitstellen einer erfindungsgemäßen Messerablage; Anpassung der Abmessungen der bereitgestellten Messerablage an die Breite und/oder Tiefe des Aufnahmeraums der Schublade; und Einlegen, insbesondere Befestigen, der Messerablage in den Aufnahmeraum der Schublade. Vorzugsweise erfolgt die Anpassung der Abmessungen der Messerablage an die Breite bzw. Tiefe des Aufnahmeraums der Schublade durch Schneiden, insbesondere mit einer Schere oder einem Messer.

Im Sinne der Erfindung ist unter dem Begriff der "Schneide" eines Messers auch die Klinge eines Messers zu verstehen. Die Begriffe "Schneide" und "Klinge" werden - soweit nicht anders angegeben - als Synonyme verwendet.

Die Erfindung basiert auf dem Ansatz, auf einer, vorzugsweise flexiblen, Grundplatte eine Vielzahl von länglichen Noppen, Stiften oder Stäbchen vorzusehen, welche derart angeordnet und/oder geformt und/oder ausgerichtet und/oder voneinander beabstandet sind, dass die Schneide eines Messers von einem zwischen benachbarten Noppen gebildeten Zwischenraum aufgenommen und/oder gehalten werden kann. Vorzugsweise stehen die Noppen hierbei mit ihrem unteren Ende auf der Grundplatte, wohingegen das obere Ende der Noppen frei ist, so dass die Scheide eines Messers vom oberen Ende der Noppen her in einen zwischen den auf der Grundplatte stehenden Noppen gebildeten Zwischenraum eingeführt werden kann, bis die Schneide auf der Grundplatte aufliegt. Der Abstand der den Zwischenraum bzw. Aufnahmeraum bildenden Noppen voneinander kann hierbei etwa so groß sein wie die Dicke der Klinge des Messers. Es ist aber auch möglich, den Abstand größer als die Dicke der Klinge zu wählen, wodurch das im Zwischenraum aufgenommene Messer ein gewisses Spiel hat. Es ist aber auch möglich, den Abstand zwischen den betreffenden Noppen kleiner zu wählen als die Klingendicke, wodurch die Klinge im Zwischenraum eingeklemmt wird und/oder spielfrei im Zwischenraum sitzt. Die Messerablage kann, gegebenenfalls nach Anpassung der Abmessungen, in eine Schublade eingelegt werden.

Die erfindungsgemäße Messerablage kann Messer unterschiedlicher Größe, insbesondere Klingenlänge, Klingenbreite und Klingendicke, aufnehmen, ist einfach zu reinigen und aufgrund ihrer Kompaktheit zum Einlegen in eine übliche Küchenschublade geeignet.

Vorzugsweise stehen die Noppen senkrecht auf der Grundplatte. Dadurch kann eine besonders leichte Reinigung der Messerablage erreicht werden. Ferner sind senkrecht stehende Noppen fertigungstechnisch besonders einfach zu realisieren.

Es ist außerdem bevorzugt, dass die Noppen das Messer im Bereich der Schneide in einer festen Position halten können.

Es ist darüber hinaus bevorzugt, dass durch eine enge Anordnung der Noppen auf der Grundplatte und/oder bei einer, verglichen mit dem Abstand zwischen den die Messerschneide aufnehmenden Noppen, dicken Messerschneide das Messer durch die Noppen fixiert werden kann.

Ferner ist bevorzugt, dass das Messer in einer Position und/oder einer Stellung fixiert werden kann, indem die Schneide des Messers zwischen Noppen eingeklemmt wird.

Vorzugsweise kann das Messer durch die Noppen auf der Schneide stehend gehalten werden. Alternativ oder zusätzlich kann das Messer durch die Noppen in einer senkrechten Stellung gehalten werden.

Durch eine oder mehrere der vorstehend genannten Ausgestaltungen kann das eingelegte Messer besonders zuverlässig und damit verschleißarm und verletzungssicher gehalten werden, ohne dass hierdurch die Reinigung der Messerablage merklich erschwert würde.

Es ist ferner besonders bevorzugt, dass sich die Noppen nach oben hin verjüngen. Vorzugsweise weisen die Noppen jeweils ein freies oberes Ende und ein an der Grundplatte befindliches unteres Ende auf und verjüngen sich zu ihrem freien oberen Ende hin, wobei der Querschnitt der Noppen zum freien oberen Ende hin abnimmt.

Vorzugsweise haben die Noppen jeweils im Bereich des freien oberen Endes eine Ausdehnung zwischen etwa 1 mm und 3 mm.

Alternativ oder zusätzlich ist besonders bevorzugt, dass sich die Noppen zur Grundplatte hin verdicken. Vorzugsweise weisen die Noppen jeweils ein freies oberes Ende und ein an der Grundplatte befindliches unteres Ende auf und verdicken sich zu ihrem an der Grundplatte befindlichen unteren Ende hin, wobei der Querschnitt der Noppen zum unteren Ende hin zunimmt.

Vorzugsweise haben die Noppen jeweils im Bereich des an der Grundplatte befindlichen unteren Endes eine Ausdehnung, insbesondere einen Durchmesser, zwischen etwa 3 mm und 5 mm.

Vorzugsweise befindet sich zwischen dem unteren Ende und dem oberen Ende der Noppen ein Übergangsbereich, in welchem der Querschnitt der Noppen in Form einer abgeflachten Stufe und/oder flaschenhalsartig zum oberen Ende der Noppen hin abnimmt.

Es ist ferner bevorzugt, dass die Noppen jeweils ein freies oberes Ende und ein an der Grundplatte befindliches unteres Ende aufweisen und jeweils im Bereich des an der Grundplatte befindlichen unteren Endes so geformt sind, dass die Schneide eines aufgenommenen Messers zwischen zwei oder mehreren Noppen im Bereich des an der Grundplatte befindlichen unteren Endes der Noppen eingeklemmt wird.

Außerdem ist bevorzugt, dass die Noppen eine Länge von mindestens 15 mm, insbesondere mindestens 30 mm, haben.

Ferner kann es bevorzugt sein, unterschiedlich hohe bzw. lange Noppen vorzusehen und diese insbesondere so auszugestalten, dass sowohl kleinere als auch größere Messer und/oder Messer in unterschiedlichen Ausführungen oder Formen, wie z.B. Messer mit unterschiedlichen Größenverhältnissen von Klinge zum Griff, bei gleichzeitig einfacher Waschbarkeit der Messerablage besonders sicher und zuverlässig aufgenommen werden können. So können beispielsweise in einem Bereich der Grundplatte Noppen mit einer ersten Länge und in einem weiteren Bereich der Grundplatte Noppen mit einer zweiten Länge angeordnet sein, wobei die zweite Länge größer ist als die erste Länge. Der Bereich mit den Noppen mit der ersten Länge ist dann vorzugsweise zur Aufnahme von Messern mit einer kleineren Klingenbreite vorgesehen, wohingegen der Bereich mit den Noppen mit der zweiten Länge zur Aufnahme von Messern mit einer vergleichsweise größeren Klingenbreite vorgesehen ist. Selbstverständlich können vorzugsweise mehr als zwei Bereiche mit unterschiedlich langen Noppen vorgesehen sein, also beispielsweise drei oder mehrere Bereiche mit jeweils unterschiedlich langen Noppen.

Ferner kann es bevorzugt sein, unterschiedlich dicke Noppen vorzusehen und/oder unterschiedliche Abstände zwischen den Noppen vorzugsehen und/oder diese so auszugestalten, dass sowohl Messer mit kleinerer als auch Messer mit größerer Klingendicke und/oder Messer mit unterschiedlichen Klingenformen und/oder Formen der jeweiligen Messerschneide bei gleichzeitig einfacher Waschbarkeit der Messerablage von den Noppen besonders sicher und zuverlässig aufgenommen, insbesondere gehalten, werden können.

So können beispielsweise in einem Bereich der Grundplatte Noppen einer ersten Dicke und in einem weiteren Bereich der Grundplatte Noppen einer zweiten Dicke angeordnet sein, wobei die zweite Dicke größer ist als die erste Dicke. Der Bereich mit den Noppen mit der ersten Dicke kann dann beispielsweise zur Aufnahme von Messern mit einer kleineren Klingendicke vorgesehen sein, wohingegen der Bereich mit den Noppen mit der zweiten Dicke zur Aufnahme von Messern mit einer vergleichsweise größeren Klingendicke vorgesehen ist. Als Dicke der Noppen ist vorzugsweise der Querschnitt der Noppen in einer Ebene parallel zur Grundplatte zu verstehen, insbesondere der Querschnitt im Bereich des unteren Endes der Noppen.

Alternativ oder zusätzlich können beispielsweise die Noppen in einem Bereich der Grundplatte einen ersten Abstand voneinander haben und die Noppen in einem weiteren Bereich der Grundplatte einen zweiten Abstand voneinander haben, wobei der zweite Abstand größer ist als der erste Abstand. Vorzugsweise ist der Abstand der Noppen gegeben durch die Breite des Zwischenraums zwischen den Noppen, in welchen die Schneide des Messers aufgenommen wird. Der Bereich mit den Noppen mit dem ersten Abstand voneinander kann dann beispielsweise zur Aufnahme von Messern mit kleinerer Klingendicke vorgesehen sein, wohingegen der Bereich mit den Noppen mit dem zweiten Abstand zur Aufnahme von Messern mit vergleichsweise größerer Klingendicke vorgesehen ist.

Selbstverständlich können vorzugsweise mehr als zwei Bereiche mit unterschiedlich dicken und/oder voneinander beabstandeten Noppen vorgesehen sein, also beispielsweise drei oder mehrere Bereiche mit jeweils unterschiedlich dicken und/oder beabstandeten Noppen.

Durch eine oder mehrere der vorstehend genannten Ausgestaltungen der Noppen können die Schneiden von Messern unterschiedlicher Größe, insbesondere mit unterschiedlicher Länge und Dicke der Schneide, sowohl einfach zwischen die Noppen eingelegt als auch sicher zwischen den Noppen gehalten werden, ohne dass dadurch die leichte Waschbarkeit der Messerablage beeinträchtigt wird.

Bei einer weiteren bevorzugten Ausgestaltung ist die Messerablage aus einem Kunststoff, insbesondere einem gummiartigen elastischen Kunststoff hergestellt. Insbesondere ist der Kunststoff schnittfest.

Vorzugsweise enthalten die Grundplatte und/oder die Noppen einen elastischen, insbesondere gummiartigen, Kunststoff. Insbesondere können die Grundplatte und/oder die Noppen aus einem elastischen, insbesondere gummiartigen, Kunststoff bestehen.

Durch den, insbesondere elastischen, Kunststoff kann ein Anpassen an verschiedene Messerformen, insbesondere Schliffformen, erleichtert werden.

Die Messerablage ist ferner vorzugsweise aus einem gummiartigen, insbesondere bis mindestens 70°C, hitzebeständigen Kunststoff hergestellt. Alternativ oder zusätzlich ist der Kunststoff beständig gegenüber wässrigen Lösungen zumindest eines der folgenden Stoffe: Phosphate, Bleichmittel, Tenside, Enzyme. Alternativ oder zusätzlich ist der Kunststoff beständig gegenüber Bestandteilen von handelsüblichen Geschirrspülmitteln zum manuellen und/oder maschinellen Geschirrspülen. Insbesondere ist die Messerablage spülmaschinenfest. Durch eine oder mehrere der vorstehend genannten Ausgestaltungen wird ein einfaches und problemloses Reinigen der Messerablage, insbesondere in einer Spülmaschine, ermöglicht.

Bei einer weiteren bevorzugten Ausgestaltung sind die Noppen in zwei oder mehreren Reihen auf der Grundplatte derart angeordnet, dass die Schneide eines Messers zwischen den Noppen von jeweils zwei, insbesondere parallel verlaufenden, benachbarten Reihen aufgenommen werden kann.

Vorzugsweise sind die Noppen einer Reihe gegenüber den Noppen einer jeweils benachbarten Reihe in Richtung der Reihe zueinander versetzt.

Vorzugsweise beträgt der Abstand der Noppen voneinander innerhalb einer Reihe zwischen 10 mm und 30 mm, insbesondere zwischen 15 mm und 20 mm.

Vorzugsweise entspricht der Abstand der Noppen einer Reihe zu den entsprechenden Noppen einer übernächsten Reihe der Ausdehnung der Noppen im Bereich eines an der Grundplatte befindlichen unteren Endes der Noppen. Durch eine oder mehrere der vorstehend genannten Ausgestaltungen, insbesondere hinsichtlich der Anordnung der Noppen, können Messer zwischen Noppen sicher gehalten, insbesondere eingeklemmt, werden, wobei gleichzeitig die Gesamtzahl der Noppen reduziert und deren Abstand zueinander erhöht werden kann, so dass eine leichte Waschbarkeit gewährleistet bleibt.

Ferner ist bevorzugt, dass die Grundplatte eine Dicke von mindestens 5 mm, insbesondere mindestens 10 mm, hat. Dadurch wird eine gute Stabilität der Messerablage erreicht und ferner ermöglicht, dass die Unterseite des Griffs eines mit im Bereich der Schneide durch die Noppen gehaltenen Messers auf der jeweiligen Unterlage, auf welcher die Messerablage liegt, wie z.B. auf einem Tisch oder dem Boden einer Schublade, aufliegen kann, wodurch ein Kippen des Messers zur Griffseite hin verhindert wird.

Vorzugsweise ist eine, insbesondere an der Grundplatte vorgesehene, Griffauflage zur Auflage des Messergriffs des Messers, das im Bereich der Schneide durch die Noppen gehalten wird, vorgesehen.

Alternativ oder zusätzlich können im Bereich der Griffauflage Auflagenoppen derart auf der Grundplatte angeordnet und/oder derart ausgestaltet sein, dass der Messergriff auf den Auflagenoppen aufliegt, wenn das Messer im Bereich der Schneide durch die Noppen gehalten wird.

Alternativ oder zusätzlich können ein oder mehrere Auflageelemente vorgesehen sein, welche im Bereich der Griffauflage an der Grundplatte, insbesondere lösbar, angebracht sind und derart an der Grundplatte angeordnet und/oder derart ausgestaltet sind, dass der Messergriff auf den Auflageelementen aufliegt oder von diesen aufgenommen wird, wenn das Messer im Bereich der Schneide durch die Noppen gehalten wird.

Durch eine oder mehrere der vorstehend genannten Ausgestaltungen der Griffauflage, wird eine zuverlässige und erforderlichenfalls leicht an die Form und/oder Größe des jeweiligen Messergriffs anpassbare Auflage für den Messergriff realisiert, durch welche insbesondere ein Kippen des Messers zum Messergriff hin verhindert und somit ein sicherer Halt des Messers in der Messerauflage gewährleistet wird, ohne die Anzahl der Noppen vergrößern zu müssen, was letztlich auch die Einfachheit beim Reinigen der Messerauflage weiter erhöht.

Messerablage nach einem der vorangehenden Ansprüche, wobei die Grundplatte eine obere Seite, auf welcher die Noppen angeordnet sind, und eine der oberen Seite gegenüber liegende Unterseite aufweist, wobei die Unterseite der Grundplatte rutschfest ausgestaltet ist, so dass die Messerablage bei der Aufnahme eines Messers und/oder bei der Entnahme eines aufgenommenen Messers gegenüber einer Unterlage, insbesondere einer Bodenfläche einer Schublade oder einer Küchenarbeitsfläche, nicht verrutscht.

Nachfolgend werden einige Aspekte und Vorteile der Messerablage zusammengefasst:
- Die Noppen stehen vorzugsweise senkrecht auf einer Grundplatte.
- Ein eingelegtes Messer wird stabil in Position gehalten.
- Das Messer kann auf der Schneide stehen, ohne dass der gummiartige Kunststoff die Schneide beschädigt.
- Die senkrechten Noppen halten das Messer im Bereich der Schneide in einer festen Position.
- Durch eine enge Anordnung der Noppen bzw. bei einer dicken Messerschneide kommt es zu einer richtig gehenden Fixierung des Messers.
- Die sich nach oben verjüngende Form der Noppen hat den Vorteil, dass sich das Messer leichter einlegen lässt.
- Die sich nach unten verdickende Form der Noppen hat den Vorteil, dass sich das Messer stabil lagern lässt.
- Das elastische Material hat den Vorteil, dass sich die Noppen an unterschiedliche Formen und Dicken des Messerblattes anpassen können.
- Die Wahl eines hitzebeständigen Materials lässt eine einfache Reinigung in der Spülmaschine zu.
- Um die Messer stabiler in der Messerablage zu verstauen und ein Kippen auf den Messergriff (z.B. kurze Messerschneide, verbunden mit einem schweren Messergriff) zu vermeiden, ist eine zusätzliche Griffauflage optional.
- Es wird ein elastischer, gummiartiger Kunststoff gewählt, um ein Anpassen an verschiedene Messerformen (Schliffformen) zu erleichtern.

Weitere Merkmale, Vorteile und Anwendungsmöglichkeiten der vorliegenden Erfindung ergeben sich aus der nachfolgenden Beschreibung in Zusammenhang mit den Figuren. Es zeigen:
- Fig. 1: ein erstes Beispiel einer Messerablage in perspektivischer Ansicht;
- Fig. 2: ein zweites Beispiel einer Messerablage in perspektivischer Ansicht;
- Fig. 3: eine Schnittansicht des in Fig. 2 gezeigten zweiten Beispiels entlang der Richtung S1;
- Fig. 4: eine Schnittansicht des in Fig. 2 gezeigten zweiten Beispiels entlang der Richtung S2;
- Fig. 5: ein drittes Beispiel einer Messerablage in Draufsicht;
- Fig. 6: eine Seitenansicht eines Ausschnitts aus der in Fig. 5 gezeigten Messerablage ohne Messer (a) und mit eingelegten Messer (b);
- Fig. 7: eine Seitenansicht eines vierten Beispiels einer Messerablage;
- Fig. 8: eine Seitenansicht eines fünften Beispiels einer Messerablage;
- Fig. 9: eine Seitenansicht eines sechsten Beispiels einer Messerablage;
- Fig. 10: a) bis e) Seitenansichten unterschiedlich geformter Noppen; und
- Fig. 11: ein Beispiel einer Schublade mit eingelegter Messerablage in perspektivischer Ansicht.

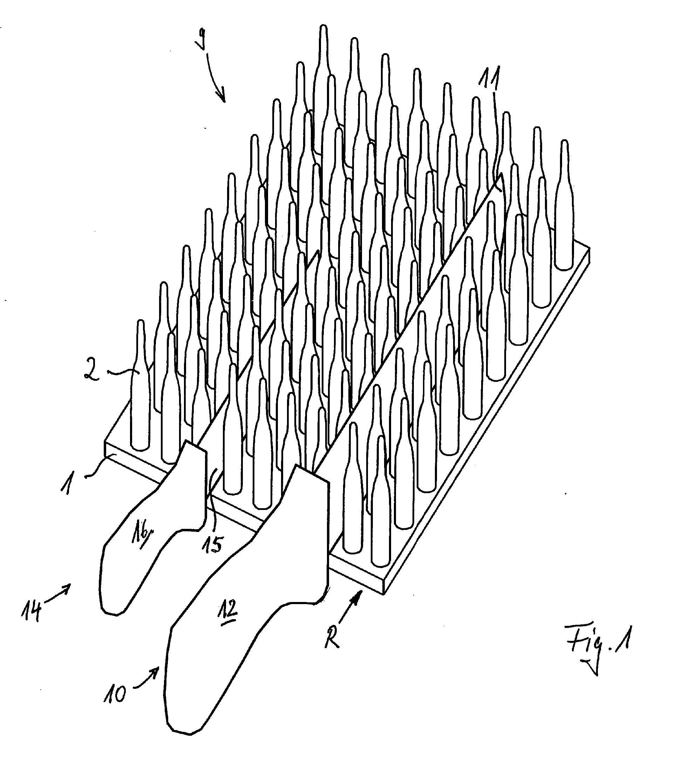

Figur 1 zeigt ein erstes Beispiel einer Messerablage 9 in perspektivischer Ansicht. Auf einer im Wesentlichen ebenen Grundplatte 1 ist eine Vielzahl von länglichen und/oder stiftförmigen und/oder stäbchenförmigen Noppen 2 angeordnet.

Im dargestellten Beispiel stehen die Noppen 2 im Wesentlichen senkrecht auf der Grundplatte 1. Die Noppen 2 sind entlang von im Wesentlichen parallel zu einer Längsrichtung R verlaufenden Reihen angeordnet, wobei der Abstand der einzelnen Noppen 2 innerhalb einer Reihe vorzugsweise zwischen etwa 15 mm und 20 mm liegt. Der Abstand der Noppen 2 zwischen den einzelnen Reihen ist vorzugsweise deutlich kleiner und entspricht in dem hier dargestellten Beispiel in etwa dem Durchmesser der Noppen 2 im Bereich des jeweiligen unteren Endes der Noppen 2, welches vorzugsweise zwischen etwa 3 mm und 5 mm liegt.

Vorzugsweise sind die Grundplatte 1 und/oder die Noppen 2 aus einem elastischen Kunststoff, insbesondere einem gummiartigen Kunststoff, hergestellt. Es ist ferner bevorzugt, dass die Grundplatte 1 und die Noppen 2 einstückig ausgebildet sind und beispielsweise durch Pressen oder Spritzgießen von Kunststoff, insbesondere Gummi, erhalten werden.

Zwischen den Noppen 2 von jeweils zwei benachbarten und in Längsrichtung R verlaufenden Noppenreihen wird ein länglicher Zwischenraum gebildet, in welchen die Schneide 11 eines Messers 10 eingelegt und dabei in einer im Wesentlichen vertikalen Stellung gehalten werden kann. Entsprechendes gilt für die Schneide 15 des hier dargestellten weiteren Messers 14.

Die Länge der Noppenreihen in Längsrichtung R der Messerablage 9 ist vorzugsweise so gewählt, dass die Schneide 11 des jeweils längsten Messers 12 eines Messersatzes 10, 14 aufgenommen werden kann, ohne dass die Messerspitze des Messers 10 am Ende der jeweiligen Reihe herausragt.

Die Höhe bzw. Länge der länglichen Noppen 2 über der Grundplatte 1 ist vorzugsweise so gewählt, dass die jeweils aufzunehmenden Messer 10, 14 sicher in den Noppenzwischenräumen gehalten werden. Vorzugsweise haben die Noppen 2 eine Länge von mindestens etwa 15 mm, insbesondere mindestens 30 mm.

Im dargestellten ersten Beispiel der Messerablage 9 sind die Noppen 2 im Wesentlichen auf der gesamten Fläche der Grundplatte 1 angeordnet. Die Grundplatte 1 ist hierbei vorzugsweise so dimensioniert, dass sich die Messergriffe 12 und 16 der beiden Messer 10 und 14 bei jeweils eingelegter Messerschneide 11 bzw. 15 außerhalb der Grundplatte 1 befinden. Vorzugsweise ist die Dicke der Grundplatte 1 hierbei so gewählt, dass die jeweilige Unterseite der Messergriffe 12 und 16 die Unterlage, auf welcher sich die Grundplatte 1 befindet, beispielsweise den Tisch oder den Bodenbereich einer Schublade, nicht berührt oder gerade noch berührt. Hierdurch wird gewährleistet, dass ein möglichst großer Teil der jeweiligen Schneide 11 bzw. 15 auf der Grundplatte 1 zu liegen kommt, ohne etwa durch einen zu hoch auf der Unterlage aufliegenden Messergriff 12 bzw. 16 angewinkelt und dadurch gegebenenfalls nicht mehr ausreichend sicher zwischen den Noppen 2 gehalten werden zu können. Vorzugsweise weist die Bodenplatte eine Dicke von mindestens 5 mm, insbesondere mindestens 10 mm, auf.

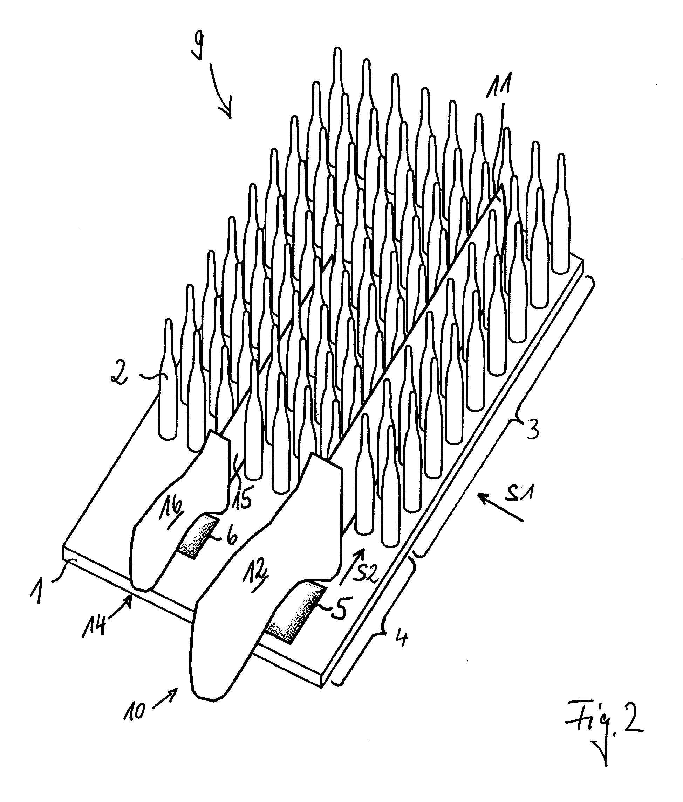

Figur 2 zeigt ein zweites Beispiel einer Messerablage 9 in perspektivischer Ansicht. Im Unterschied zu dem in Figur 1 gezeigten ersten Beispiel weist die Grundplatte 1 einen ersten Abschnitt 3 auf, in welchem die Noppen 2 zur Aufnahme der jeweiligen Messerschneide 11 bzw. 15 angeordnet sind, wohingegen ein zweiter Abschnitt 4 der Grundplatte 1, in welchem keine Noppen vorgesehen sind, als zusätzliche Griffauflage für die Messergriffe 12 und 16 dient.

Vorzugsweise ist die Griffauflage im zweiten Abschnitt 4 an die Größe und/oder Form der jeweiligen Messergriffe 12 bzw. 16 anpassbar. So können beispielsweise Auflageelemente 5 und 6 vorgesehen sein, welche vorzugsweise lösbar am zweiten Abschnitt 4 der Grundplatte 1 befestigt werden können und, je nach Größe bzw. Form des aufzunehmenden Messergriffs 12 bzw. 16, unterschiedliche Größe bzw. Form haben, wie im Beispiel der Figur 2 anhand von unterschiedlich großen Auflageelementen 5 und 6 für die unterschiedlich großen Griffe 12 und 16 angedeutet. Hierdurch wird erreicht, dass der jeweilige Messergriff 12 bzw. 16 besonders sicher auf der im zweiten Abschnitt 4 der Grundplatte 1 vorgesehenen Griffauflage gehalten bzw. aufgenommen wird.

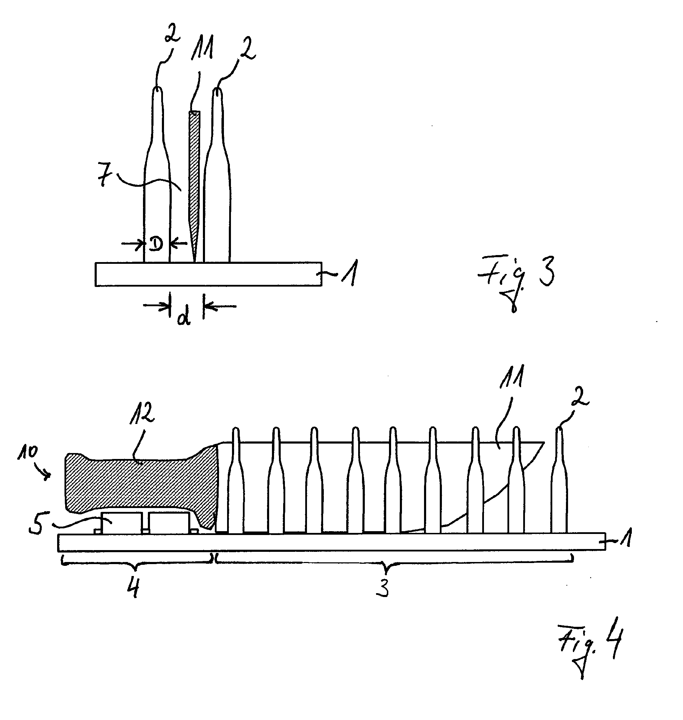

Figur 3 zeigt eine Schnittansicht eines Ausschnitts des in Figur 2 gezeigten zweiten Beispiels entlang der Richtung S1. Die auf der Grundplatte 1 im Wesentlichen senkrecht stehenden länglichen Noppen 2 der beiden parallel zu einander verlaufenden Noppenreihen bilden einen Zwischenraum 7, in welchem die Schneide 11 des Messers 10 aufgenommen ist. Im vorliegenden Beispiel entspricht der Abstand d der beiden den Zwischenraum 7 begrenzenden Noppen 2 im Wesentlichen dem Durchmesser D der Noppen im Bereich des Noppenfußes. Die zwischen den Noppen 2 aufgenommene Schneide 11 hat daher etwas Spiel, wodurch diese besonders leicht in den Zwischenraum 7 eingelegt werden kann bzw. ohne zusätzlichen Kraftaufwand aus dem Zwischenraum 7 wieder heraus genommen werden kann. Je nach Ausgestaltung kann es aber auch erwünscht bzw. von Vorteil sein, den Abstand d zwischen den jeweils benachbarten Noppen 2 noch größer oder aber auch noch kleiner zu machen. In letzterem Fall kann dadurch erreicht werden, dass die Schneide 11 des Messers mit nur geringem Spiel oder sogar spielfrei zwischen den beiden Noppen 2 aufgenommen werden kann. Die Schneide 11 wird hierbei besonders sicher von den Noppen 2 gehalten.

Figur 4 zeigt eine Schnittansicht des in Figur 2 gezeigten zweiten Beispiels entlang der Richtung S2. Wie aus der Figur 2 hervorgeht, ist die Länge der im ersten Abschnitt 3 der Grundplatte vorgesehenen Noppenreihen in Längsrichtung der Messerablage 9 vorzugsweise größer als die Länge der aufgenommenen Schneide 11 des Messers 10. Auch die Länge der Noppen 2 ist in dem gezeigten Beispiel größer als die Breite der Schneide 11 des Messers 10. Auf diese Weise wird eine besonders sichere Aufnahme der Schneide 11 gewährleistet.

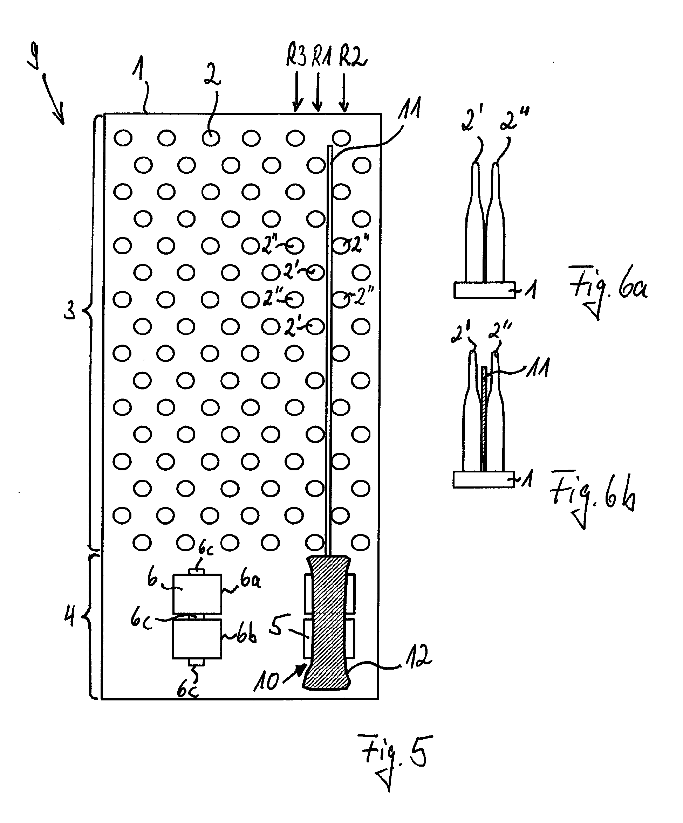

Im Bereich des zweiten Abschnitts 4 der Grundplatte 1 ist das Auflageelement 5 vorgesehen, welches als Griffauflage für den Griff 12 des Messers 10 dient. Im gezeigten Beispiel setzt sich das Auflageelement 5 aus zwei Teilelementen zusammen, die vorzugsweise lösbar an der Grundplatte 1 angebracht sind und deren Länge und/oder Höhe an die Größe bzw. der Form des Messergriff 12 angepasst ist, so dass dieser zuverlässig auf dem Auflageelement 5 aufliegt. Figur 5 zeigt ein drittes Beispiel einer Messerablage in Draufsicht. Wie bei den in den Figuren 2 und 4 gezeigten Beispielen sind auch bei dieser Messerablage 9 eine Vielzahl von Noppen 2 mit im Wesentlichen kreisförmigem Querschnitt im Bereich eines ersten Abschnitts 3 der Grundplatte 1 angeordnet. Der sich an den ersten Abschnitt 3 anschließende zweite Abschnitt 4 der Grundplatte1 ist als Griffauflage für die Griffe der jeweils aufgenommenen Messer ausgebildet. Im vorliegenden Beispiel sind zwei Auflageelemente 5 und 6 vorgesehen, auf welchen jeweils ein Messergriff eines im Bereich des jeweiligen Aufnahmeelements 5 bzw. 6 eingelegten Messers aufliegen kann. Im dargestellten Beispiel ist die Schneide 11 eines Messers 10 zwischen den Noppen 2' und 2" einer ersten und zweiten Reihe R1 bzw. R2 von Noppen eingelegt und wird von diesen in einer im Wesentlichen vertikalen Stellung gehalten. Die Größe des mit den Noppen 2 versehenen ersten Abschnitts 3 der Grundplatte 1 sowie die Größe des als Griffablage ausgebildeten zweiten Abschnitts 4 der Grundplatte 1 sind hierbei so gewählt, dass der Messergriff 12 des eingelegten Messers 10 im Bereich des zweiten Abschnitts 4 der Grundplatte 1 auf dem dort vorgesehenen Auflageelement 5 aufliegen kann.

Wie bereits im Zusammenhang mit dem in Figur 4 gezeigten Beispiel erwähnt, können die Auflageelemente 5 und 6 aus zwei oder mehreren Teilelementen zusammengesetzt sein, um das jeweilige Aufnahmeelement 5 bzw. 6 an die Form und/oder Größe des jeweils aufzunehmenden Messergriffs 12 anpassen zu können. In dem vorliegend dargestellten Beispiel der Figur 5 weist das Auflageelement ein erstes und zweites Teilelement 6a und 6b auf. Vorzugsweise sind der zweite Abschnitt 4 der Grundplatte 1 und/oder die Teilelemente 6a und/oder 6b so ausgestaltet, dass die Teilelemente 6a bzw. 6b lösbar am zweiten Abschnitt 4 der Grundplatte 1 angebracht werden können. Dies kann beispielsweise mittels einer, vorzugsweise lösbaren, Klebeverbindung, beispielsweise in Form eines doppelseitigen Klebebandes realisiert werden. Aber auch geeignete Steckverbindungen stellen eine besonders bevorzugte Lösung zum Anbringen der Teilelemente 6a und 6b an der Grundplatte 1 dar. Im vorliegenden Beispiel sind im Bereich des zweiten Abschnitts 4 der Grundplatte 1 Halteelemente 6c vorgesehen, welche derart auf der Grundplatte 1 angeordnet und voneinander beabstandet sind, dass die einzelnen Teilelemente 6a und 6b zwischen den Halteelementen 6c aufgenommen und in der jeweiligen Position gehalten werden können. Im dargestellten Beispiel wird ein erstes Teilelement 6a zwischen einem oberen und einem mittleren Halteelement 6c gehalten, während ein zweites Teilelement 6b von dem mittleren und einem unteren Teilelement 6c gehalten wird. Die Halteelemente 6c können vorzugsweise ebenfalls noppenartig ausgebildet sein und vorzugsweise in einem Fertigungsschritt, beispielsweise durch Pressen oder Spritzgießen von insbesondere gummiartigen Kunststoffen, zusammen mit den Noppen 2 erzeugt werden. Die vorstehenden Ausführungen gelten selbstverständlich für das im vorliegenden Beispiel gezeigte Auflageelement 5 entsprechend.

Bei dem in Figur 5 gezeigten dritten Beispiel der Messerablage 9 sind die Noppen 2 derart auf der Grundplatte 1 angeordnet, dass die Noppen 2' der ersten Reihe R1 gegenüber den Noppen 2" der der ersten Reihe R1 benachbarten zweiten Reihen R2 bzw. R3 in Längsrichtung versetzt sind. Vorzugsweise haben die Noppen 2' der ersten Reihe R1 einen Abstand voneinander, welcher mit dem Abstand der Noppen 2" der benachbarten zweiten Reihen R2 bzw. R3 identisch ist und bevorzugt zwischen etwa 15 mm und 20 mm liegt. Der Versatz der einzelnen Noppen 2' der ersten Reihe R1 in Längsrichtung gegenüber Noppen 2" der jeweils benachbarten zweiten Reihe R2 bzw. R3 beträgt hierbei vorzugsweise die Hälfte des Abstandes der Noppen 2' bzw. 2" innerhalb der jeweiligen Reihe R1 bzw. R2 und R3. Bei einem bevorzugten Abstand der Noppen innerhalb einer Reihe von etwa 15 bis 20 mm entspricht also der bevorzugte Versatz der Noppen 2' und 2" der jeweils benachbarten Reihen R1 und R2 bzw. R3 zwischen etwa 7 und 10 mm.

Der Abstand der Noppen 2' der ersten Reihe R1 von den Noppen 2" der jeweils benachbarten zweiten Reihe R2 bzw. R3 ist vorzugsweise so gewählt, dass zwischen diesen Noppen 2' und 2" die Schneide 11 des Messers 10 in einer im Wesentlichen vertikalen Stellung auf der Grundplatte 1 gehalten werden kann. Insbesondere ist es möglich, den Abstand zwischen den Noppen 2' und 2" so zu wählen, dass die Schneide des eingelegten Messers 10 zwischen den Noppen 2' und 2" eingeklemmt wird und besonders fest zwischen den Noppen 2' und 2" der ersten Reihe R1 bzw. zweiten Reihe R2 sitzt.

Dies ist in Figur 6 veranschaulicht, die eine Seitenansicht eines Ausschnitts aus der in Figur 5 gezeigten Messerablage 9 ohne Messer (6a) und mit eingelegtem Messer (6b) zeigt. Wie Figur 6a zu entnehmen ist, haben die ersten Noppen 2' der ersten Reihe R1 nur einen geringen Abstand d von den zweiten Noppen 2' der zweiten Reihe R2. Der Abstand d zwischen den ersten Noppen 2' und den zweiten Noppen 2" kann hierbei vorzugsweise weniger als 1 mm bis hin zu wenigen Zehntel Millimeter, insbesondere zwischen 0,1 und 0,5 mm, betragen. Je nach Dicke der Schneide der jeweils aufzunehmenden Messer, insbesondere bei relativ dünnen Messerschneiden, kann es besonders bevorzugt sein, die ersten Noppen 2' der ersten Reihe R1 und die zweiten Noppen 2" der zweiten Reihe R2 so auf der Grundplatte 1 anzuordnen, dass deren Abstand zueinander verschwindend gering oder gleich Null sein kann. Insbesondere bei der Verwendung von elastischen, vorzugsweise gummielastischen Noppen, können hierbei Messerschneiden mit besonders hoher Zuverlässigkeit zwischen den ersten und zweiten Noppen 2' bzw. 2" eingeklemmt und gehalten werden.

Figur 6b zeigt die in Figur 6a dargestellten ersten und zweiten Noppen 2' bzw. 2" sowie eine zwischen den ersten Noppen 2' und zweiten Noppen 2" gehaltene Messerschneide 11. Aufgrund des geringen Abstands zwischen den ersten Noppen 2' und den zweiten Noppen 2" wird die Messerschneide 11 sicher und zuverlässig zwischen den Noppen 2' und 2" der beiden Reihen R1 und R2 gehalten.

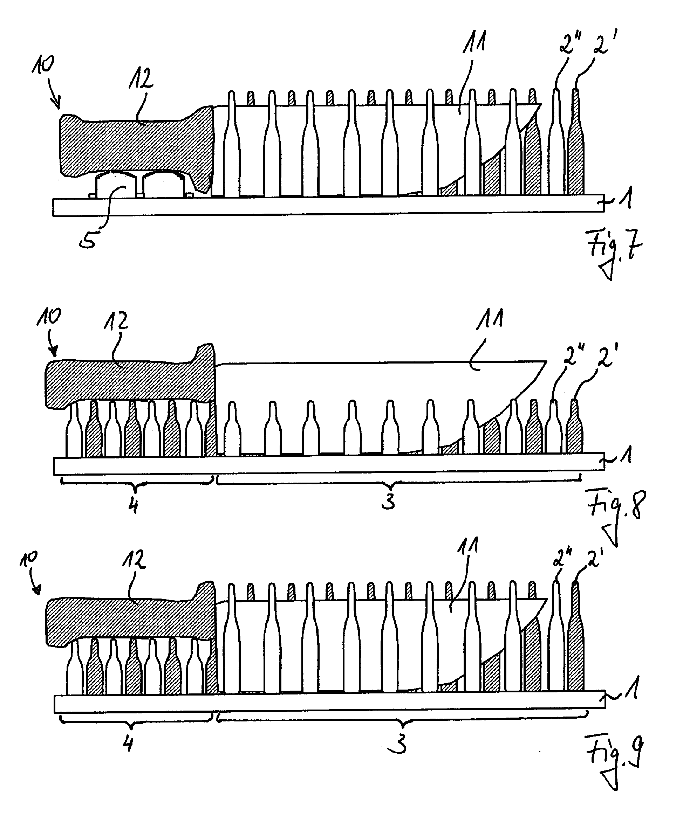

Figur 7 zeigt eine Seitenansicht eines vierten Beispiels einer Messerablage, bei welcher - wie bei dem in Figur 5 gezeigten Bespiel - erste Noppen 2' einer ersten Reihe R1 gegenüber zweiten Noppen 2" von jeweils parallel dazu verlaufenden und benachbarten zweiten Reihen R2 versetzt angeordnet sind. Aus Anschaulichkeitsgründen sind in Figur 7 die ersten Noppen 2' der ersten Reihe schraffiert, um diese leichter von den zweiten Noppen 2" unterscheiden zu können. Im gezeigten Beispiel ist ein Messer 10 mit einer relativ breiten Messerschneide 11 zwischen den ersten und zweiten Noppen 2' und 2" aufgenommen. Die Länge bzw. Höhe der Noppen 2' und 2" ist in diesem Beispiel so gewählt, dass diese über die Breite der Messerschneide 11 hinausgehen. Das eingelegte Messer 10 weist ferner einen relativ breiten Messergriff 12 auf, der auf den beiden Teilelementen des Auflageelements 5, das bezüglich Höhe und Form an den Messergriff 12 angepasst ist, aufliegt. Im Übrigen gelten die oben stehenden Ausführungen im Zusammenhang mit den Figuren 5 und 6 entsprechend.

Figur 8 zeigt eine Seitenansicht eines fünften Beispiels einer Messerablage, bei welcher erste und zweite Noppen 2' bzw. 2" sowohl im Bereich des ersten Abschnitts 3 der Grundplatte 1 als auch im Bereich des zweiten Abschnitts 4 der Grundplatte 1 angeordnet sind. Die Schneide 11 des Messers 10 wird hierbei, analog zu dem in Figur 7 gezeigten Beispiel, zwischen den ersten Noppen 2' einer ersten Reihe und den zweiten Noppen 2" einer zweiten Reihe gehalten, insbesondere eingeklemmt. Im darin dargestellten fünften Beispiel der Messerablage sind die Noppen 2' und 2" in ihrer Höhe bzw. in ihrer Länge jedoch so gewählt, dass diese nur noch in etwa der Hälfte der Breite der Messerschneide 11 entspricht.

Vorzugsweise ist die Höhe bzw. Länge der im Bereich des zweiten Abschnitts 4 der Grundplatte 1 angeordneten Noppen so gewählt, dass der Griff 12 des Messers 10, dessen Schneide 11 zwischen den ersten und zweiten Noppen 2' und 2" gehalten wird, auf den im zweiten Abschnitt 4 vorgesehenen Noppen aufliegen kann, wodurch ein Kippen des aufgenommenen Messers 10 einfach und zuverlässig verhindert wird.

Im dargestellten Beispiel der Figur 8 ist der Messergriff 12 etwas weniger breit als der in Figur 7 gezeigte Messergriff. Für den Fall, dass die Messerablage auch Messer mit breiteren Messergriffen 12 aufnehmen soll, können im zweiten Abschnitt 4 der Grundplatte 1 alternativ oder zusätzlich entsprechend kürzere Noppen vorgesehen sein. Grundsätzlich ist es aber auch möglich, die Noppen zumindest im zweiten Abschnitt 4 der Grundplatte 1 so auszugestalten, dass diese in ihrer Höhe leicht angepasst werden können, beispielsweise durch einfaches Abschneiden bzw. Zuschneiden mittels einer Schere oder eines Messers. Besonders geeignet sind hierbei elastische und/oder gummiartige Kunststoffe.

Figur 9 zeigt eine Seitenansicht eines sechsten Beispiels einer Messerablage, bei welcher im ersten Abschnitt 3 der Grundplatte 1 erste und zweite Noppen 2' und 2" vorgesehen sind, welche höher sind als die Breite der Schneide 11 des jeweils eingelegten Messers 10. Die oben stehenden Ausführungen im Zusammenhang mit dem in Figur 7 gezeigten Beispiel gelten hierbei entsprechend. Im Unterschied dazu sind jedoch im Bereich des zweiten Abschnitts 4 der Grundplatte 1 anstelle von zusätzlichen Auflageelementen als Griffauflage Noppen vorgesehen, die in Form und/oder Anordnung im Wesentlichen den Noppen 2' und 2" im ersten Abschnitt 3 der Grundplatte 1 entsprechen können, sich jedoch insbesondere in ihrer Höhe von den für das Halten der Messerschneide 11 vorgesehenen Noppen 2' und 2" unterscheiden. In dem hier gezeigten Beispiel ist die Breite des Messergriffs 12 deutlich kleiner als die des Messergriffs 12 in Figur 7. Dementsprechend ist die Höhe der Noppen im zweiten Abschnitt 4 der Grundplatte 1 größer als die Höhe des Auflageelements 5 (siehe Figur 7) und gleichzeitig kleiner als die Höhe der ersten und zweiten Noppen 2' und 2".

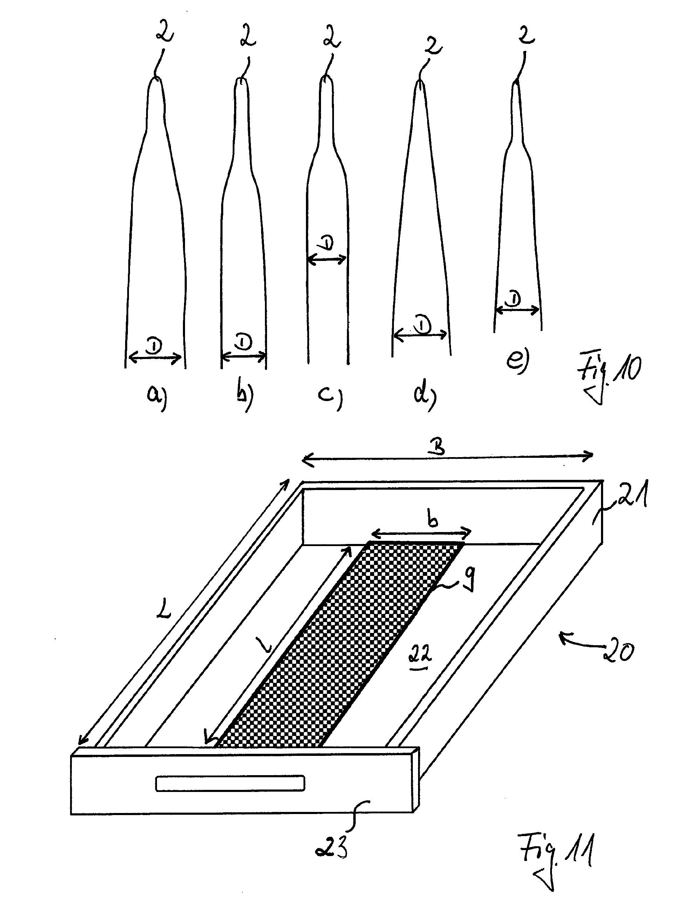

Figur 10 zeigt Seitenansichten unterschiedlich geformter Noppen 2, wie sie vorzugsweise bei den vorstehend beschriebenen Beispielen der Figuren 1 bis 9 vorgesehen sein können.

Die in Figur 10a gezeigte Noppe 2 hat einen vorzugsweise kreisförmigen Querschnitt mit einem Durchmesser D, welcher ausgehend vom unteren, an der Grundplatte 1 der Messerablage befindlichen Ende zum oberen freien Ende der Noppe 2 hin kontinuierlich abnimmt. Im dargestellten Beispiel nimmt der Durchmesser D der Noppe 2 in einem im oberen Dritten liegenden Übergangsbereich jedoch etwas stärker ab und geht anschließend wieder zu einem weniger stark abfallenden Verlauf über. Dieser Übergangsbereich hat in der gezeigten Seitenansicht die Form einer "abgeflachten" Stufe.

Für die in Figur 10b gezeigte Noppe 2 gelten die oben stehenden Ausführungen im Zusammenhang mit der in Figur 10a gezeigten Noppe entsprechend, wobei der Übergangsbereich mit einer stärkeren Abnahme des Durchmessers D bereits in einem Bereich beginnt, welcher auf etwa 50 bis 60 % der Gesamthöhe der Noppe 2 liegt.

Bei der in Figur 10c gezeigten Form der Noppe 2 bleibt der Durchmesser D, beginnend vom unteren Ende der Noppe 2, zunächst in etwa konstant und nimmt erst in einem Übergangsbereich, der auf der Höhe zwischen etwa 50 % und 60 % der Noppenhöhe liegt, ab und geht danach wieder in einen im Wesentlichen parallelen Verlauf über, bis das obere Noppenende erreicht ist. Der Übergang hat auch hier vorzugsweise die Form einer "abgeflachten" Stufe.

Aufgrund des beschriebenen Verlaufs des Durchmessers D kann die Form der in den Figuren 10b und 10c gezeigten Noppen 2 auch als Flaschenform bezeichnet werden.

Vorzugsweise kann die Form der vorstehend beschriebenen "abgeflachten" Stufe bzw. die Flaschenform auch als ein Übergang mit zwei abgerundeten oder gewölbten, aufeinander folgenden Knicken betrachtet werden, wobei ein erster Knick durch eine konvexe Wölbung und ein sich daran anschließender zweiter Knick durch eine konkave Wölbung des Dickenverlaufs gegeben ist.

Bei der in Figur 10d gezeigten Form einer Noppe 2 nimmt der Durchmesser D vom unteren Ende der Noppe zu deren oberen Ende hin kontinuierlich ab, ohne dass, wie bei den Bespielen der Figuren 10a bis c, ein Übergangsbereich in Form einer "abgeflachten" Stufe bzw. eines abgeflachten zweifachen Knicks vorgesehen ist.

Bei einer Weiterbildung der in Figur 10d gezeigten Form der Noppe 2 nimmt der Durchmesser D vom unteren Ende der Noppe zu deren oberen Ende hin bis zum Erreichen eines, vorzugsweise abgerundeten, einzigen Knicks hin kontinuierlich ab, um im weiteren Verlauf nach dem Knick stärker als vor Erreichen des Knicks bis zum Erreichen des oberen Endes der Noppe abzunehmen. Diese Weiterbildung ist fertigungstechnisch besonders einfach zu realisieren.

Für die in Figur 10e gezeigte Form einer Noppe 2 gelten im Wesentlichen die Ausführungen im Zusammenhang mit den Figuren 10a und b entsprechend.

Die Verwendung von Noppen 2 mit einer Form, wie sie insbesondere in den Figuren 10a bis c sowie 10e dargestellt sind, hat den besonderen Vorteil, dass einerseits der Zwischenraum zwischen den einzelnen Noppen 2 bzw. 2' und 2" (siehe Figuren 1 bis 3 und 5) im Bereich des oberen Endes der Noppen besonders groß ist, so dass die Schneide 11 eines Messers 10 besonders leicht und sicher den für das Messer 10 jeweils vorgesehenen Zwischenraum "findet" und dort eingeführt werden kann. In Verbindung mit dem zum unteren Ende der jeweiligen Noppen 2 bzw. 2' und2" hin zunehmenden Durchmesser D wird dabei gleichzeitig gewährleistet, dass die Schneide 11 des eingelegten Messers 10 besonders sicher und zuverlässig, insbesondere spielfrei, in dem zwischen den Noppen 2 bzw. 2' und 2" gebildeten Zwischenraum gehalten wird.

Die Noppen 2 bzw. 2' und 2" der in den Figuren 1 bis 9 gezeigten Messerablagen haben im Wesentlichen eine Form, welche der in Figur 10c gezeigten Noppenform entspricht. Grundsätzlich können die Noppen 2 bzw. 2' und 2" jedoch auch jede andere Noppenform, insbesondere die Noppenform der in den Figuren 10a, b, d und e gezeigten Noppen 2 annehmen. Grundsätzlich ist es ferner möglich, die Noppen 2 bzw. 2' und 2" im Wesentlichen als zylinderförmige oder quaderförmige längliche Stäbchen oder Stifte auszugestalten, die im Wesentlichen senkrecht auf der Grundplatte 1 stehen. Ferner ist es möglich, die Noppen 2 bzw. 2' und 2" kegelstumpfförmig oder pyramidenstumpfförmig auszugestalten. Es ist auch möglich, einen unteren Bereich der Noppen 2 bzw. 2' und 2" zylinderförmig auszugestalten und den oberen Bereich kegel- oder kegelstumpfförmig beziehungsweise pyramiden- oder pyramidenstumpfförmig auszugestalten. Neben den oben erwähnten Vorteilen im Zusammenhang mit den in den Figuren 10a bis c und d gezeigten Formen können solche Formgestaltungen insbesondere auch herstellungstechnische Vorteile aufweisen, wie zum Beispiel besonders einfach herzustellende Press- bzw. Gießformen und damit entsprechend geringere Herstellungskosten.

Figur 11 zeigt ein Beispiel einer Schublade 20 mit eingelegter Messerablage 9 in perspektivischer Ansicht. Die Schublade 20 weist eine von drei umlaufenden Seitenwänden 21 sowie einer Frontwand 23 begrenzte Bodenfläche 22 auf, die in Einschubrichtung der Schublade 20 eine Länge L und quer dazu eine Breite B hat. Die Länge L der Schublade 20 kann auch als Tiefe der Schublade 20 bezeichnet werden.

Die im dargestellten Beispiel aus Anschaulichkeitsgründen nur stark schematisch wiedergegebene Messerablage 9 liegt auf der Bodenfläche 22 der Schublade 20 und hat vorzugsweise eine Länge I, welche der Länge L der Schublade 20 entspricht. Die Breite b der Messerablage 9 ist in dem gezeigten Beispiel kleiner gewählt als die Breite B der Bodenfläche 22. Vorzugsweise wird eine solche Schublade 20 hergestellt, indem eine bereitgestellte Messerablage 9 in ihrer Breite b und/oder ihrer Länge I so verändert wird, dass diese zumindest entlang einer Dimension der Bodenfläche 22 der Schublade 20, also in Bezug auf die Länge L und/oder die Breite B der Bodenfläche 22, angepasst wird.

Im dargestellten Beispiel wurde eine bereitgestellte Messerablage 9 so zugeschnitten, beispielsweise mit Hilfe einer Schere oder eines Messers, dass deren Länge I in etwa der Länge L der Bodenfläche 22 entspricht. Die Messerablage 9 liegt dadurch mit ihren Stirnseiten an der Frontwand 23 sowie der gegenüberliegenden, rückwärtigen Seitenwand der Schublade 20 an und wird von diesen, vorzugsweise spielfrei, gehalten. Dadurch kann die Messerablage beim Einschieben der Schublade 20 in einen dafür vorgesehenen Schrank nicht verrutschen.

Alternativ oder zusätzlich hierzu ist es aber auch möglich, die Unterseite der Messerablage 9, insbesondere die Grundplatte 1, rutschfest auszugestalten, so dass diese beim Aufliegen auf der Bodenfläche 22 eine hohe Haftreibung zeigt.

Alternativ oder zusätzlich können auf der Unterseite der Messerablage 9 aber auch Haftelemente, beispielsweise in Form eines oder mehrerer doppelseitig klebender Klebestreifen, vorgesehen sein.

Im dargestellten Beispiel ist ferner die Breite b der Messerablage 9 so gewählt, dass auf der Bodenplatte 22 der Schublade 20 im Bereich neben, insbesondere links und/oder rechts, der darauf liegenden Messerablage 9 noch Platz ist für andere Küchenutensilien.

## Patentansprüche

1. Messerablage (9) zur Aufnahme mindestens eines Messers (10, 14), welches einen Messergriff (12, 16) und eine Schneide (11, 15) aufweist, mit einer Grundplatte (1),
**gekennzeichnet durch**
auf der Grundplatte (1) stehende Noppen (2; 2', 2"), **durch** welche das Messer (10, 14) im Bereich der Schneide (11, 15) gehalten werden kann.

2. Messerablage nach Anspruch 1, wobei die Noppen (2; 2', 2") senkrecht auf der Grundplatte (1) stehen.

3. Messerablage nach einem der vorangehenden Ansprüche, wobei das Messer (12, 14) durch die Noppen (2; 2', 2") auf der Schneide (11, 15) stehend gehalten werden kann.

4. Messerablage nach einem der vorangehenden Ansprüche, wobei sich die Noppen (2; 2', 2") nach oben hin verjüngen.

5. Messerablage nach einem der vorangehenden Ansprüche, wobei sich die Noppen (2; 2', 2") zur Grundplatte (1) hin verdicken.

6. Messerablage nach einem der vorangehenden Ansprüche, wobei die Noppen (2; 2', 2") jeweils ein freies oberes Ende und ein an der Grundplatte (1) befindliches unteres Ende aufweisen und jeweils im Bereich des an der Grundplatte (1) befindlichen unteren Endes so geformt sind, dass die Schneide (11, 15) eines aufgenommenen Messers (10, 14) zwischen zwei oder mehreren Noppen (2; 2', 2") im Bereich des an der Grundplatte (1) befindlichen unteren Endes der Noppen (2; 2', 2") eingeklemmt wird.

7. Messerablage nach einem der vorangehenden Ansprüche, wobei zumindest ein Teil der Noppen (2; 2', 2") eine Länge von mindestens 15 mm, insbesondere mindestens 30 mm, haben.

8. Messerablage nach einem der vorangehenden Ansprüche, wobei die Grundplatte (1) eine Dicke von mindestens 5 mm, insbesondere mindestens 10 mm, hat.

9. Messerablage nach einem der vorhergehenden Ansprüche aus einem Kunststoff, insbesondere einem gummiartigen elastischen Kunststoff.

10. Messerablage nach einem der vorhergehenden Ansprüche aus einem gummiartigen, insbesondere bis mindestens 70°C, hitzebeständigen Kunststoff.

11. Messerablage nach einem der vorangehenden Ansprüche, wobei die Noppen (2'; 2") in zwei oder mehreren Reihen (R1; R2, R3) auf der Grundplatte (1) derart angeordnet sind, dass die Schneide (11) eines Messers (10) zwischen den Noppen (2'; 2") von jeweils zwei, insbesondere parallel verlaufenden, benachbarten Reihen (R1; R2, R3) aufgenommen werden kann.

12. Messerablage nach Anspruch 11, wobei die Noppen (2') einer Reihe (R1) gegenüber den Noppen (2") einer jeweils benachbarten Reihe (R2, R3) in Richtung der Reihe (R1; R2, R3) versetzt sind.

13. Messerablage nach einem der vorangehenden Ansprüche mit einer, insbesondere an der Grundplatte (1) vorgesehenen, Griffauflage (4) zur Auflage des Messergriffs (12, 16) des Messers (10, 14), das im Bereich der Schneide (11, 15) durch die Noppen (2; 2', 2") gehalten wird.

14. Schublade (20), insbesondere für einen Küchenschrank, mit
- einer Messerablage (9) nach einem der vorangehenden Ansprüche oder
- einem Messerablagesystem (9, 10, 14), das eine Messerablage (9) nach einem der vorangehenden Ansprüche und ein oder mehrere Messer (10, 15) aufweist.

15. Verfahren zur Herstellung einer Schublade (20) mit einer Messerablage (9) mit folgenden Schritten:
- Bereitstellen einer Schublade (20), insbesondere einer Küchenschrankschublade, mit einem Aufnahmeraum zur Aufnahme von Objekten, wobei der Aufnahmeraum eine Breite (B) und eine Tiefe (L) aufweist,
- Bereitstellen einer Messerablage (9) nach einem der Ansprüche 1 bis 13 oder eines Messerablagesystems (9, 10, 14), das eine Messerablage (9) nach einem der Ansprüche 1 bis 13 und ein oder mehrere Messer (10, 15) aufweist,
- Anpassung der Abmessungen (b, I) Messerablage (9) an die Breite (B) und/oder Tiefe (L) des Aufnahmeraums der Schublade (20) und
- Einlegen der Messerablage (9) bzw. des Messerablagesystems (9, 10, 14) in den Aufnahmeraum der Schublade (20).
